# FASCICULE DE BREVET EUROPEEN

(11) **EP 3 383 592 B1**
(45) Date de publication et mention de la délivrance du brevet: **29.01.2020**
(21) Numéro de dépôt: 16813093.8
(22) Date de dépôt: 29.11.2016
(51) Int. Cl.: B25J 9/00

(54) **EXOSQUELETTE POUR ASSISTANCE AUX EFFORTS HORIZONTAUX**
EXOSKELETT ZUR UNTERSTÜTZUNG HORIZONTALER VERSUCHE
EXOSKELETON FOR ASSISTING HORIZONTAL EFFORTS

(30) Priorité: 30.11.2015 FR 1561585
(43) Date de publication de la demande: 10.10.2018
(73) Titulaire: Robotiques 3 Dimensions, 89470 Monéteau (FR)
(72) Inventeur: GRYGOROWICZ, Serge, 89580 Gy l'Eveque (FR); RIGLET EPOUSE BAPTISTE, Aurélie, 45230 Dammarie-sur-Loing (FR); PERRIN, Antoine, 88290 Saulxures-sur-Moselotte (FR)
(74) Mandataire: Benech, Frédéric
(86) Numéro de dépôt international: PCT/FR2016/053131
(87) Numéro de publication internationale: WO 2017/093651

(56) Documents cités:
- FR-A1- 3 016 821
- JP-A- 2007 130 234
- US-A1- 2015 001 269

## Description

La présente invention concerne le domaine de la robotique et plus particulièrement les robots aptes à collaborer avec un opérateur, couramment désignés sous le terme « cobot » ou exosquelette.

Il s'agit de systèmes mécatroniques dont les mouvements sont pilotés par ceux d'un opérateur et qui permettent d'amplifier les efforts de ce dernier.

Ils sont par exemple utilisés pour manipuler des pièces pesantes ou de grandes dimensions ou encore pour assister le geste d'un opérateur en démultipliant ses capacités en termes d'effort, lors d'une tâche pénible et répétitive, nécessitant toutefois de conserver le savoir-faire et la flexibilité de l'homme.

Ainsi, l'invention concerne un dispositif du type exosquelette destiné à assister les efforts horizontaux d'un opérateur valide.

Elle concerne également un procédé d'utilisation d'un tel dispositif.

Ce dispositif du type exosquelette comporte deux jambes agencées pour être couplées aux pieds d'un utilisateur, un organe de liaison entre les extrémités supérieures des jambes auxquelles il est articulé, ainsi qu'un bras porte-outil relié à l'organe de liaison.

Ce dispositif peut notamment être utilisé avec des outils engendrant une forte pénibilité, notamment du fait des efforts horizontaux importants à fournir au niveau de l'outil lui-même.

L'invention peut ainsi être utilisée avantageusement dans les secteurs du BTP (Bâtiments et Travaux Publics) et de tout autre type d'industrie nécessitant l'utilisation d'outils et donc l'assistance au travail de ces outils, comme des râteaux ou encore tout outil dont le maniement génère des efforts horizontaux importants, comme des perforateurs pour des murs verticaux.

Le dispositif selon l'invention sera ainsi avantageusement utilisé par un opérateur qui, dans le cadre d'un chantier routier par exemple, réalise des revêtements en produits qui nécessitent un étalement, comme des enrobés.

Cet opérateur est communément dénommé « tireur ou râteau ».

Il réalise le revêtement grâce à un râteau et c'est lui qui fournit la force nécessaire à l'étalement du produit concerné. Cette force peut atteindre jusqu'à 70 kg.

La réalisation du revêtement nécessite des gestes répétitifs sur de longues périodes, ces gestes entrainant une torsion du tronc de l'opérateur, ainsi qu'une forte sollicitation au niveau de l'épaule et du dos.

Ceci peut entrainer des troubles musculo-squelettiques et une fatigue importante.

De nombreux dispositifs ont déjà été proposés, tels que des exosquelettes d'aide à l'utilisation d'outils, pour démultiplier les capacités physiques d'un utilisateur. Certains d'entre eux sont très sophistiqués, comprenant notamment des systèmes d'actionnement des membres inférieurs, associés à des capteurs de direction et des moyens de calcul.

Ce type de dispositifs, compte tenu de leurs complexité notamment, ne sont pas adaptés à des travaux en extérieur et sur chantier (robustesse).

On connait aussi (FR 3 016 821) un dispositif exosquelette à port frontal comprenant deux jambes parallèles articulées, selon le préambule de la revendication 1. Si ce dispositif présente des avantages il peut encore être amélioré.

La présente invention a donc pour objet de fournir un dispositif du type exosquelette et un procédé d'utilisation d'un tel dispositif permettant d'apporter efficacement une assistance aux efforts horizontaux d'un opérateur, tout en étant robuste et d'un coût raisonnable.

Dans ce but, l'invention propose notamment un dispositif du type exosquelette comprenant deux jambes agencées pour être couplées aux pieds d'un utilisateur, un organe de liaison entre les extrémités supérieures des jambes auxquelles il est articulé et un bras porte-outil, relié à l'organe de liaison,
caractérisé en ce que les jambes et l'organe de liaison sont agencés pour former sensiblement un triangle dont un sommet appartient à l'organe de liaison, de telle sorte que l'ensemble des forces appliquées convergent au sommet dudit triangle.

Ces forces comprennent l'effort sur le bras porte-outil et les réactions au sol.

Le dispositif permet de reporter ces forces directement au sol, sans passer par le corps de l'opérateur dont on exploite simplement le poids pour maintenir l'équilibre.

Ainsi, le corps (dos, bras) de l'utilisateur fournit moins d'efforts puisque le dispositif permet l'actionnement du bras porte-outil et apporte donc une assistance mécanique à l'utilisateur, et facilite l'équilibre.

Dans des modes de réalisation avantageux, on a par ailleurs et/ou de plus recours à l'une et/ou à l'autre des dispositions suivantes :
- au moins une partie dudit bras est montée coulissante sur ledit organe de liaison et le dispositif comprend des moyens d'actionnement dudit bras, en fonction des mouvements de l'utilisateur, pour assurer son déplacement en translation rectiligne ;
- le dispositif comporte des moyens de détection de l'intention de l'utilisateur, reliés auxdits moyens d'actionnement pour les commander, cette commande étant réalisée en fonction du niveau de l'effort détecté ainsi que de sa direction ; on réalise ainsi une amplification de l'effort de l'opérateur.
- le bras est monté, sur l'organe de liaison, mobile en rotation autour d'un axe Z passant entre les deux jambes et sensiblement vertical lorsque le dispositif est en cours d'utilisation, pour permettre un mouvement de balayage angulaire du bras;
- le bras est monté mobile en rotation sur l'organe de liaison, autour d'un axe X sensiblement perpendiculaire à l'axe longitudinal Y et à l'axe Z, pour permettre l'inclinaison de l'outil ;
- l'organe de liaison est articulé sur chacune des jambes autour d'un axe X sensiblement perpendiculaire à l'axe Z et à l'axe longitudinal Y lorsque le dispositif est au repos, pour assurer l'indépendance entre la portion du bras porte-outil et la position des jambes de l'utilisateur ;
- le bras intègre une tige qui comporte, à une extrémité destinée à être en contact avec le sol, un outil par exemple une lame dans le cas du râteau;
- la tige est montée sur le bras en rotation autour de son axe longitudinal Y, pour permettre à la tige de faire un demi-tour et/ou permettre l'ajustement de l'orientation de la lame;
- chacune des jambes comporte deux tiges montées coulissantes l'une par rapport à l'autre, pour permettre d'ajuster la hauteur de chaque jambe, de manière à faciliter le déplacement ou le franchissement d'obstacle (montée d'une marche par exemple) des moyens de blocage étant alors prévus ;
- le dispositif comporte au moins une première poignée destinée à la préhension du dispositif par un utilisateur et dans laquelle sont prévus les moyens de détection de l'intention de l'utilisateur, ainsi que les éventuels moyens d'actionnement en rotation de la tige ;
- le dispositif comporte une deuxième poignée, écartée de la première d'une distance non nulle et fixée sur l'organe de liaison.

L'invention propose également un procédé d'utilisation d'un dispositif du type exosquelette selon l'invention, comprenant deux jambes, un organe de liaison entre les extrémités supérieures des jambes auxquelles il est articulé et un bras porte-outil relié à l'organe de liaison, les jambes et l'organe de liaison étant agencés pour former sensiblement un triangle dont un sommet appartient à l'organe de liaison, et ledit bras étant monté coulissant sur l'organe de liaison et étant prévus des moyens d'actionnement commandés par des moyens de détection de l'intention de l'utilisateur, tel qu'un capteur d'effort, procédé selon lequel on détecte si l'utilisateur a l'intention d'exercer un effort sur le bras porte-outil, grâce auxdits moyens de détection de l'intention de l'utilisateur et, lorsque la détection est positive, on commande lesdits moyens d'actionnement du bras pour assurer son déplacement en translation rectiligne, la direction du déplacement étant identique à celle détectée par les moyens de détection.

L'invention porte aussi sur l'utilisation du dispositif tel que décrit ci-dessus en parallèle avec les jambes d'un autre exosquelette.

L'invention sera mieux comprise à la lecture de la description qui suit de modes de réalisation donnés ci-après à titre d'exemples non limitatifs et qui sera faite au regard des dessins suivants dans lesquels:
La figure 1 est une vue en perspective latérale avant d'un dispositif selon un mode de réalisation de l'invention.
La figure 2 est une vue en perspective latérale arrière du dispositif selon la figure 1.
La figure 3 est une vue en perspective illustrant de manière agrandie l'organe de liaison du dispositif illustré aux figures 1 et 2.
La figure 4 est une vue en perspective illustrant de manière schématique l'organe de liaison de la figure 3.
La figure 5 est une vue en perspective latérale d'une poignée d'un dispositif selon un mode de réalisation de l'invention.
Les figures 6 à 8 sont des vues en perspective de face d'un dispositif selon un mode de réalisation de l'invention, illustrant son utilisation par un opérateur.
La figure 9 est un schéma illustrant schématiquement le dispositif et les efforts en jeu.

Dans la suite de la description, on utilisera les mêmes références numériques pour désigner des éléments identiques ou similaires.

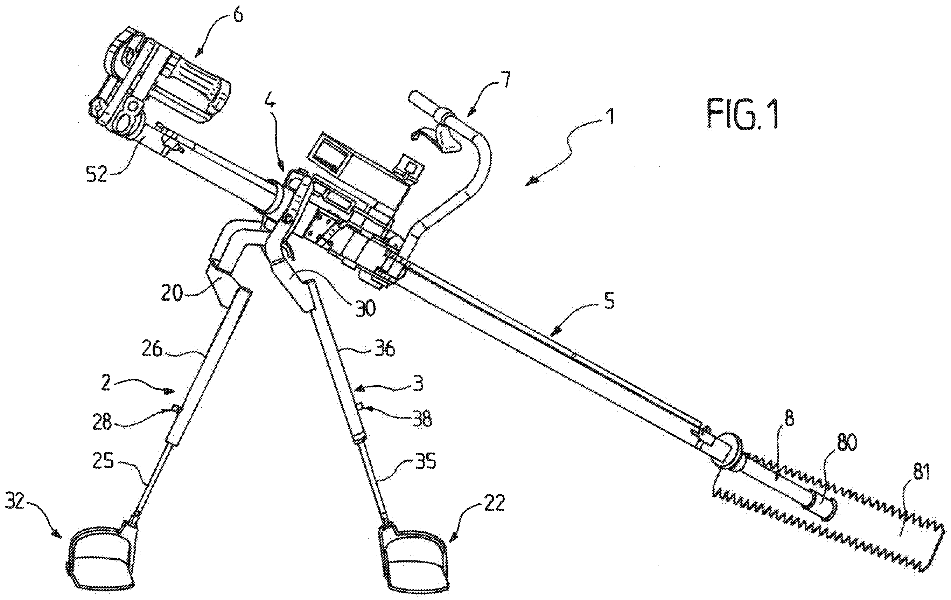

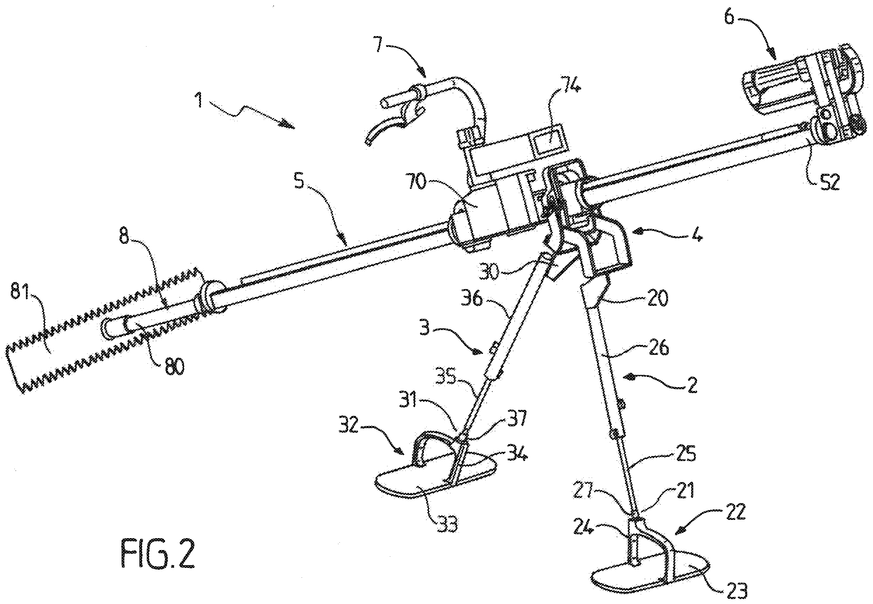

Il est tout d'abord fait référence aux figures 1 et 2 qui illustrent un dispositif du type exosquelette selon un mode de réalisation de l'invention.

Ce dispositif 1 comporte deux jambes 2 et 3 et un organe de liaison 4 entre les extrémités supérieures 20 et 30 des jambes, auxquelles il est articulé.

Ces figures montrent que les jambes et l'organe de liaison sont agencés pour former sensiblement un triangle dont le sommet est formé par l'organe de liaison.

Cette structure triangle présente l'avantage d'une rigidité importante pour une masse et un encombrement donnés. Elle est donc particulièrement robuste.

A leur extrémité inférieure 21, 31, les jambes 2 et 3 sont reliées à des semelles 22, 32, lesquelles comportent une semelle proprement dite 23, 33 et un étrier 24, 34.

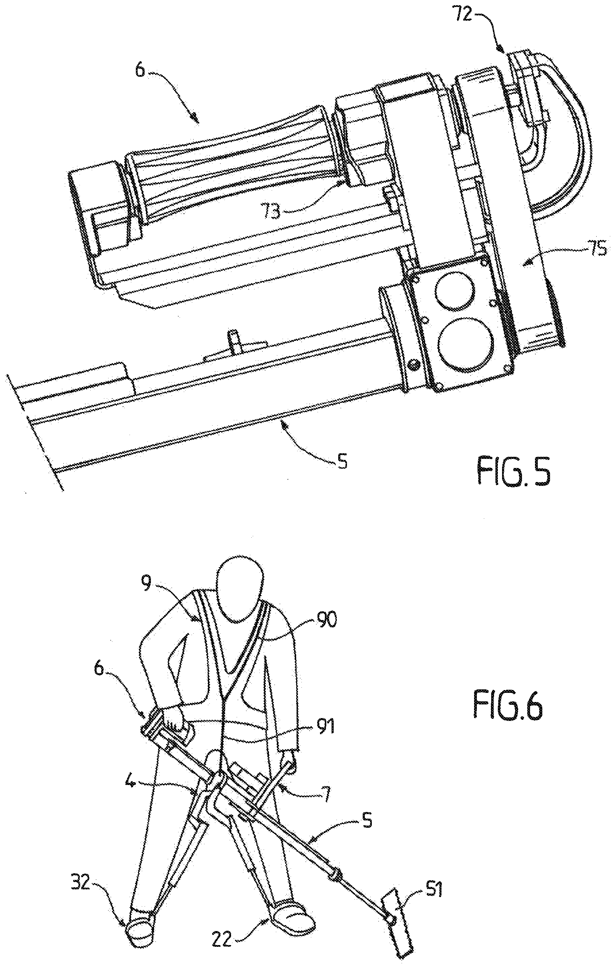

Comme l'illustre la figure 6, en cours d'utilisation du dispositif, l'opérateur positionne ses pieds sur les semelles 22 et 32.

De préférence, les faces inférieures des semelles proprement dites 23 et 33 sont recouvertes d'une couche assurant un bon coefficient d'adhérence entre la semelle et le sol. En effet, cette adhérence participe à l'équilibre de l'opérateur et du dispositif.

Les figures 6 à 8 montrent que l'organe de liaison 4 est agencé pour être positionné sous le bassin de l'opérateur, lorsque celui-ci tient le dispositif par les poignées 6 et 7.

La figure 6 montre également qu'un moyen de liaison, de type harnais, entre l'organe de liaison et l'opérateur peut être prévu. Ce harnais comporte un gilet 90 porté par l'opérateur et des sangles ou des éléments élastiques 91 destinés à être reliés à l'organe de liaison 4.

Chaque jambe 2, 3 comporte deux tiges, une tige inférieure 25, 35 et une tige supérieure 26, 36, ces deux tiges étant montées coulissantes l'une par rapport à l'autre.

En pratique, comme l'illustrent les figures 1 et 2, les tiges supérieures 26 et 36 présentent la forme d'un tube dont le diamètre est supérieur à celui des tiges inférieures 25 et 35, ces tiges inférieures pouvant ainsi coulisser à l'intérieur des tiges supérieures 26 et 36.

Cette liaison glissière entre les tiges 25 et 26 d'une part et 35 et 36 d'autre part permet d'ajuster la longueur de chaque jambe 2 et 3.

Cet ajustement permet de tenir compte de la morphologie de l'opérateur mais il a également des conséquences sur les capacités du dispositif, comme cela sera expliqué ultérieurement.

Des moyens de blocage 28, 38 par exemple formés par des pions de blocage escamotables solidaires d'une des tiges coopérant avec des orifices en vis-à-vis dans l'autre tige, sont prévus sur les tiges supérieures 26, 36 pour fixer la position relative des tiges inférieures et des tiges supérieures. Ils sont nécessaires pour assurer la reprise d'effort.

Les moyens de blocage sont, dans ce mode de réalisation, actionnés manuellement.

Par ailleurs, le coulissement entre les tiges inférieures et supérieures peut être assuré manuellement ou assisté à l'aide d'une motorisation. Les efforts nécessaires à l'équilibre pourraient également être fournis par la motorisation.

De préférence, une rotule 27, 37 relie une tige inférieure 25, 35 d'une jambe 2, 3 à une semelle 22, 32.

Cette rotule est positionnée pour assurer le bon équilibre de l'ensemble constitué par le dispositif et l'opérateur, en supprimant l'effet de basculement du pied et en favorisant l'appui de l'opérateur sur un pied unique.

A titre d'exemple, on peut positionner cette rotule sur l'intérieur du pied, à environ la moitié du talon et en hauteur, par exemple sur 100 mm.

Le dispositif 1 comporte un bras porte-outil 5 qui présente ici la forme d'un tube. Il est relié à l'organe de liaison 4 de façon à être incliné vers le sol, lorsque le dispositif est en cours d'utilisation.

Du côté opposé aux poignées 6 et 7, le bras 5 comporte une tige 8 qui est montée mobile en rotation autour de l'axe longitudinal Y du bras.

A une extrémité 80, destinée à être à proximité du sol, lorsque le dispositif est utilisé, la tige 8 comporte un outil du type lame 81.

A son extrémité opposée 52 du bras 5, destinée à être à proximité du corps de l'utilisateur en cours d'utilisation (figure 6), la première poignée 6 est fixée sur le bras 5.

Comme l'illustrent les figures 6 à 8, cette première poignée est destinée à la préhension du dispositif par un opérateur.

Il en est de même pour la deuxième poignée 7 qui est fixée à l'organe de liaison 4 et qui est donc écartée de la première poignée 6 d'une distance non nulle. Dans l'exemple illustré sur les figures, cette deuxième poignée est située en aval de l'organe de liaison 4 dans le sens d'inclinaison du bras 5.

La disposition respective des poignées 6 et 7 sur le bras 5 et sur l'organe de liaison 4 permet à un utilisateur de retrouver la position en fente qu'il adopte naturellement lorsqu'il manie un râteau (figure 6), mais en corrigeant sa posture pour lui permettant de conserver le dos droit. Toutes les forces appliquées sont sensiblement dans un même plan qui est celui de la structure triangle.

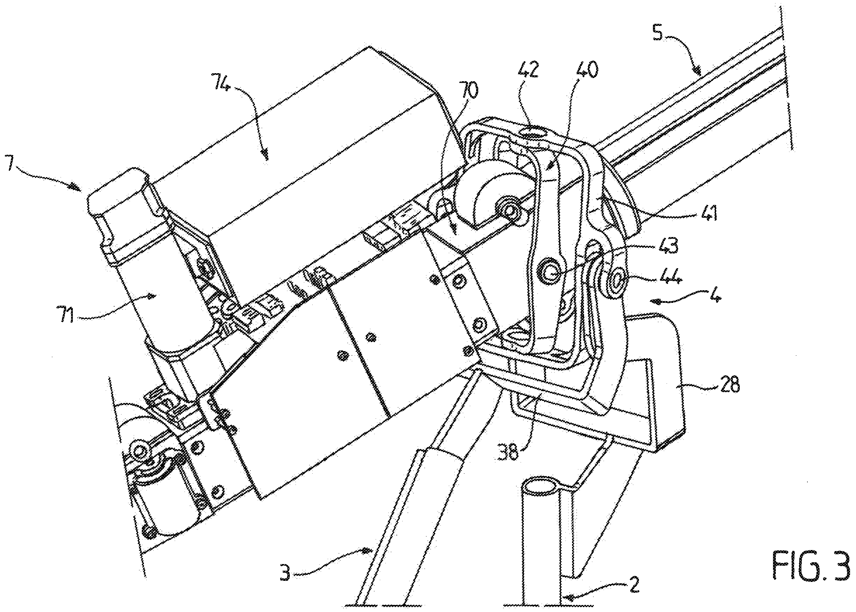

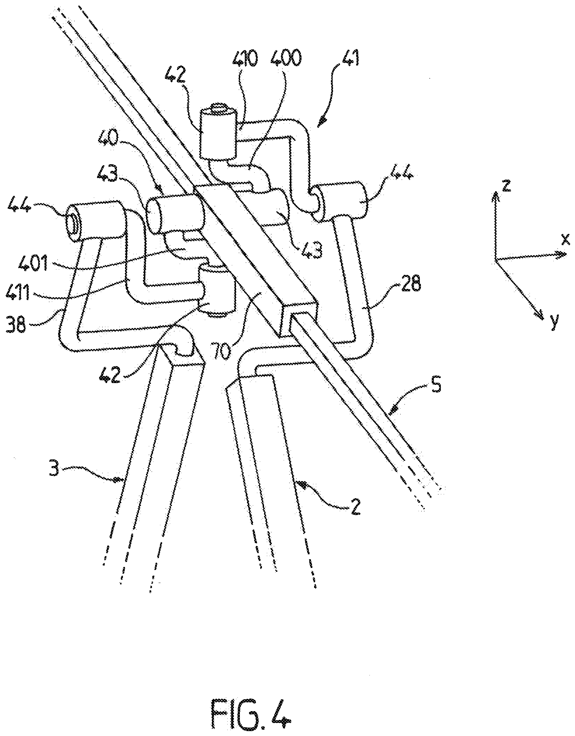

La deuxième poignée 7 est montée sur une pièce 70, sur laquelle s'articule l'organe de liaison, comme cela sera décrit en référence aux figures 3 et 4.

Le bras 5 passe à travers cette pièce 70 et est monté coulissant sur cette pièce 70 et donc sur l'organe de liaison 4. De ce fait, la distance entre les deux poignées 6 et 7 peut varier au cours de l'utilisation du dispositif.

A l'intérieur de cette pièce 70, sont prévus des moyens 71 d'actionnement du bras (non représentés de façon détaillée).

Ces moyens d'actionnement 71 sont commandés grâce à des moyens 72 de détection de l'intention de l'opérateur.

Ces moyens 72 de détection se présentent par exemple sous la forme d'un capteur d'effort et ils sont prévus au niveau de la poignée 6.

Ces moyens de détection de l'intention de l'opérateur sont reliés, de façon connue, aux moyens d'actionnement 71 pour les commander, en fonction du niveau de l'effort détecté ainsi que de sa direction. Des capteurs de présence 73, par exemple de type cellule en mode barrage infrarouge, permettent d'assurer que l'intention est volontairement fournie par la main de l'opérateur.

Les moyens d'actionnement 71, notamment alimenté en énergie électrique 74, permettent ainsi d'assurer le déplacement en translation rectiligne du bras 5, soit en direction du sol, soit en direction de l'opérateur, de façon à assister les efforts de l'opérateur, grâce à une amplification de ses efforts, par exemple d'un facteur 10.

De plus, l'effort appliqué par le dispositif au niveau de l'outil peut également être limité pour prévenir les risques de chute dus aux efforts qui ne sont pas repris par la structure et l'opérateur, c'est-à-dire les efforts qui n'appartiennent pas au plan défini par la structure triangle. Cette limitation est par exemple proportionnelle au poids de l'opérateur ou au balayage angulaire du râteau autour de l'axe Z.

Par ailleurs, la tige 8 peut tourner à l'intérieur du bras 5, autour de son axe longitudinal Y (cf. figure 4). Elle est donc mobile en rotation par rapport à l'organe de liaison 4. Cette rotation est obtenue manuellement par l'opérateur en agissant sur la première poignée 6 au travers du moyen de transmission 75. Elle pourrait également être motorisée. Elle permet de faire faire un demi-tour de la tige et/ou d'ajuster l'orientation de la lame 81.

Il va maintenant être fait référence aux figures 3 et 4 pour expliquer le fonctionnement de l'organe de liaison 4, ainsi que les différents mouvements du bras 5 par rapport à l'organe de liaison 4.

L'organe de liaison 4 permet d'assurer plusieurs degrés de liberté grâce à une structure en double cardan qui est schématiquement illustrée à la figure 4.

Ce double cardan comporte une première pièce 40, représentée sur la figure 4 sous la forme de deux éléments coudés 400 et 401. Ces deux éléments sont, en pratique, une pièce unique.

Ce cardan comporte une deuxième pièce 41 formée de deux éléments coudés 410 et 411. Ils sont représentés sous la forme de deux éléments indépendants sur la figure 4 mais constituent, en pratique, une pièce unique.

Une première extrémité de ces éléments 400 et 401 est reliée à la pièce 70 dans laquelle le bras 5 est monté coulissant.

Chacun des éléments coudés 400 et 401 de la première pièce 40 sont reliés à leur autre extrémité à une première extrémité des éléments coudés 410 et 411.

La deuxième extrémité de ces éléments 410 et 411 est, quant à elle, reliée à une extrémité d'autres éléments coudés 28 et 38 dont l'autre extrémité est fixée sur une des jambes 2, 3.

La liaison entre les éléments 400, 401 de la première pièce 40 et les éléments 410 et 411 de la deuxième pièce 41 est réalisée au moyen d'une articulation 42 permettant une rotation autour d'un axe Z.

Cet axe Z passe entre les deux jambes 2 et 3 et il est sensiblement vertical lorsque le dispositif est en cours d'utilisation.

Ainsi, ces articulations 42 permettent la rotation du bras 5 autour de l'axe Z pour réaliser un balayage angulaire du bras 5 et donc de la lame 81.

Par ailleurs, la liaison entre les éléments coudés 400 et 401 de la première pièce 40 et la pièce 70 est réalisée au moyen de deux articulations 43.

Ces articulations 43 permettent une rotation entre les éléments 400 et 401 et la pièce 70 autour d'un axe X qui est perpendiculaire à la fois à l'axe Z et à l'axe longitudinal Y du bras.

Ce mouvement de rotation permet d'incliner le bras 5 au cours de l'utilisation du dispositif pour adapter cette inclinaison aux travaux à réaliser.

Dans les modes de réalisation illustrés sur les figures, cette rotation est obtenue manuellement par l'opérateur en agissant sur la deuxième poignée 7 qui est reliée à la pièce 70.

Des moyens pourraient être prévus pour motoriser ce mouvement de rotation, notamment dans le cadre de travail à la pelle (couple permettant de soulever la pelle).

Il convient ici de souligner que ce mouvement de rotation autour de l'axe X est indépendant du mouvement de translation du bras 5 à l'intérieur de la pièce 70.

La liaison entre les éléments coudés 410 et 411 de la deuxième pièce 41 et les pièces coudées 28 et 38 reliées aux jambes 2 et 3 est réalisée au moyen d'articulations 44.

Ces articulations 44 permettent une rotation selon l'axe X entre la deuxième pièce 41 et chacune des jambes 2 et 3, lorsque les articulations sont dans la position de repos illustrée à la figure 4. Lorsque le dispositif est en cours d'utilisation, cette rotation s'effectue autour d'un axe X' situé dans un plan contenant l'axe X et perpendiculaire à l'axe Z. L'angle entre les axes X et X' est compris entre - 40° et + 40°.

Ces articulations permettent donc une indépendance entre la position du bras 5 et la position des jambes de l'opérateur, lors de l'utilisation du dispositif.

Il convient de noter que la première et la deuxième pièce 40 et 41 n'ont pas de position imposée, en cas d'alignement de rotation du bras 5 avec celle des jambes. Ceci reste sans conséquence, dans la mesure où les pièces 40 et 41 sont légères et peuvent se remettre en place sans effort important.

Le dispositif selon l'invention comporte donc de nombreux degrés de liberté tant en rotation qu'en translation. Ils permettent à l'utilisateur de reproduire, avec le dispositif, les mouvements qu'il effectue normalement avec un outil classique tel qu'un râteau.

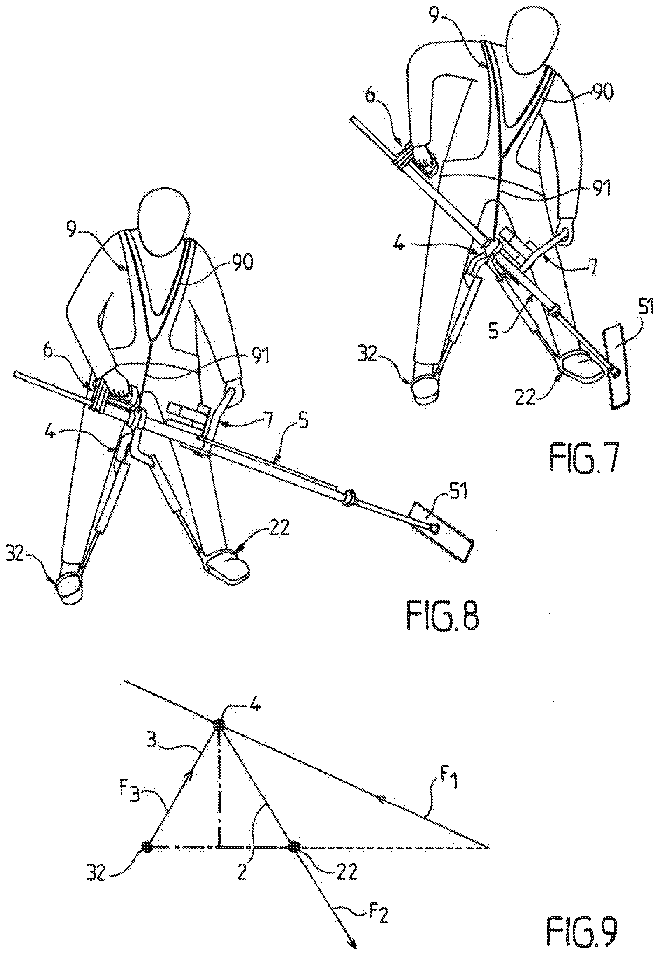

Ceci ressort notamment des figures 6 à 8 qui illustrent respectivement une position de travail intermédiaire (figure 6) dans laquelle la poignée 6 est à la hauteur de la hanche de l'utilisateur, une position de travail extrême haute (figure 7) où l'outil est proche d'un pied de l'utilisateur et une position de travail extrême basse (figure 8) où l'outil est le plus éloigné de l'utilisateur.

Par ailleurs, toutes les articulations sont situées au niveau de l'organe de liaison 4 qui est également le point de convergence des efforts sur l'outil et des réactions au sol. On rappelle que cet organe de liaison est un sommet de la structure en forme de triangle qu'il forme avec les jambes.

Des moyens pourraient être prévus afin de renseigner l'opérateur sur sa position, et ainsi l'assister dans le geste qu'il doit réaliser.

Par ailleurs, ce dispositif apporte à l'utilisateur une assistance aux efforts, en particulier aux efforts horizontaux, et lui permet d'adopter une posture non traumatisante, tout en conservant sa mobilité.

Concernant l'assistance aux efforts, l'architecture du dispositif selon l'invention présente l'avantage de ne pas prendre appui sur l'utilisateur mais d'exploiter son poids pour assurer l'équilibre de l'ensemble qu'il forme avec le dispositif.

Cette architecture favorise l'équilibre en positionnant le bras porte-outil dans le plan formé par les rotules et le centre de gravité de l'opérateur et en abaissant le point de report des efforts (sommet du triangle formé par le bras porte outil et les jambes) sur le dispositif lui-même et notamment au niveau de son organe de liaison.

Ceci est illustré schématiquement par la figure 9 sur laquelle on retrouve les éléments principaux du dispositif selon l'invention : l'organe de liaison 4, les jambes 2 et 3 et les semelles 22 et 32 pour les pieds de l'utilisateur.

La flèche F1 représente l'effort sur le bras porte-outil, la flèche F2, le poids de l'opérateur et les forces de frottement de contact au sol, et la flèche F3, la réaction du sol sur le dispositif.

Cet agencement permet de supprimer les risques de pivotement de l'ensemble formé par le dispositif et l'opérateur par rapport au sol et présente un avantage important par rapport aux dispositifs connus.

Concernant la correction de la posture de l'utilisateur, le dispositif lui permet de travailler avec le dos droit et de limiter le déplacement de son poids à une oscillation entre ses deux points d'appui sur le sol.

Enfin, les degrés de liberté du dispositif sont suffisants pour que l'opérateur puisse réaliser les gestes nécessaires à l'accomplissement de ses travaux.

En effet, dans le cas de ratissage ou d'étalement, il s'agit essentiellement de déplacements latéraux et de rotations autour d'un pied.

Il convient encore de noter que le dispositif selon l'invention est très peu encombrant, ce qui facilite son utilisation par l'opérateur.

On a pu constater que le dispositif selon l'invention n'est pas conçu pour être anthropomorphique, ce qui en réduit considérablement la complexité et donc le prix de revient.

Dans le cadre de la description qui précède, le dispositif selon l'invention ne présente pas de degrés de liberté en flexion et extension de l'homme. Cependant cela n'entrave pas le déplacement de l'opérateur. En effet, dans le cadre de ce mode de réalisation, a été favorisée la rigidité de la structure pour en augmenter la robustesse.

Cependant, si le dispositif selon l'invention ne permet pas à l'opérateur de se déplacer aisément lors de déplacements importants (marche à grande vitesse), il lui permet d'effectuer les gestes nécessaires à l'accomplissement des travaux requis.

Dans le cadre de ce mode de réalisation, les déplacements plus importants de l'utilisateur seront de préférence réalisés sans qu'il soit équipé du dispositif selon l'invention.

Cependant, le dispositif qui a été décrit précédemment pourrait être modifié pour prévoir des motorisations des glissières des jambes et qui, couplées aux membres inférieurs d'un utilisateur faciliterait la marche sur des déplacements importants. Des moyens d'actionnement des jambes articulées en fonction des mouvements de l'utilisateur pourraient également être prévus, comme cela est déjà décrit pour de nombreux dispositifs de l'état de la technique.

Il peut également être envisagé de monter une architecture triangle en parallèle des jambes d'un exosquelette de l'état de l'art, pour rigidifier celui-ci dans le plan transverse et ainsi reprendre plus aisément les efforts horizontaux d'un porte-outil motorisé.

Dans la description qui précède, le dispositif est positionné à l'avant de l'opérateur. Un autre positionnement des jambes est possible, par exemple à l'arrière de l'opérateur.

En ce qui concerne les poignées, une variante consiste à fixer également la première poignée sur l'organe de liaison, le bras s'étendant en aval de l'organe de liaison et étant alors par exemple du type télescopique. Dans cette variante, au moins une partie du bras est montée fixe sur l'organe de liaison.

Comme il va de soi et comme il résulte également de ce qui précède, la présente invention n'est pas limitée aux modes de réalisation plus particulièrement décrits. Elle en embrasse au contraire toutes les variantes et notamment celles où les énergies utilisées sont hydrauliques et/ou pneumatiques plutôt qu'électriques.

## Revendications

1. Dispositif du type exosquelette comprenant deux jambes (2, 3) agencées pour être couplées aux pieds d'un utilisateur, un organe de liaison (4) entre les extrémités supérieures des jambes auxquelles il est articulé et un bras porte-outil (5) relié à l'organe de liaison,
**caractérisé en ce que** les jambes et l'organe de liaison sont agencés pour former sensiblement un triangle dont un sommet appartient à l'organe de liaison, de telle sorte que l'ensemble des forces appliquées au dispositif convergent au sommet dudit triangle.

2. Dispositif selon la revendication 1, **caractérisé en ce qu'**au moins une partie du bras (5) est montée coulissante sur ledit organe de liaison (4) et **en ce que** le dispositif comprend des moyens d'actionnement (71) dudit bras, en fonction des mouvements de l'utilisateur, pour assurer son déplacement en translation rectiligne.

3. Dispositif selon la revendication 2, **caractérisé en ce qu'**il comporte des moyens de détection de l'intention (72) de l'utilisateur, reliés auxdits moyens d'actionnement (71) pour les commander, cette commande étant réalisée en fonction du niveau de l'effort détecté ainsi que de sa direction.

4. Dispositif selon l'une des revendications 1 à 3, **caractérisé en ce que** le bras (5) est monté, sur l'organe de liaison (4), mobile en rotation autour d'un axe Z sensiblement vertical lorsque le dispositif est en cours d'utilisation.

5. Dispositif selon l'une des revendications 1 à 4, **caractérisé en ce que** le bras (5) est monté mobile en rotation sur l'organe de liaison (4) autour d'un axe X sensiblement perpendiculaire à l'axe longitudinal Y du bras et à l'axe Z.

6. Dispositif selon l'une des revendications 1 à 5, **caractérisé en ce que** l'organe de liaison (4) est articulé sur chacune des jambes (2, 3) autour d'un axe X sensiblement perpendiculaire à l'axe Z et à l'axe longitudinal Y du bras lorsque le dispositif est au repos.

7. Dispositif selon l'une des revendications 1 à 6, **caractérisé en ce que** le bras comporte une tige avec un outil à une extrémité destinée à être en contact avec le sol.

8. Dispositif selon la revendication 7, **caractérisé en ce que** le bras comporte une tige qui est montée mobile en rotation par rapport au bras, autour de son axe longitudinal Y.

9. Dispositif selon l'une des revendications 1 à 8, **caractérisé en ce que** chacune des jambes (2, 3) comporte deux tiges (25, 26 ; 35, 36) montées coulissantes l'une par rapport à l'autre, des moyens de blocage étant prévus.

10. Dispositif selon l'une des revendications 1 à 9, **caractérisé en ce qu'**il comporte au moins une première poignée (6) destinée à la préhension du dispositif par un utilisateur et dans laquelle sont prévus les moyens de détection de l'intention de l'utilisateur.

11. Dispositif selon l'une des revendications 1 à 10, **caractérisé en ce qu'**il comporte une deuxième poignée (7), écartée de la première (6) d'une distance non nulle et fixée sur l'organe de liaison (4) .

12. Dispositif selon l'une des revendications 1 à 11, **caractérisé en ce que** les jambes (2, 3) sont reliées aux semelles (22) et (32) par l'intermédiaire de rotules (27, 37).

13. Dispositif selon l'une des revendications 1 à 12, **caractérisé en ce que** les jambes (2, 3) sont motorisées.

14. Procédé d'utilisation d'un dispositif (1) du type exosquelette selon la revendication 3, comprenant deux jambes (2, 3), un organe de liaison (4) entre les extrémités supérieures desdites jambes auxquelles il est articulé et un bras porte-outil (5) relié à l'organe de liaison, les jambes et l'organe de liaison étant agencés pour former sensiblement un triangle dont un sommet appartient à l'organe de liaison, et ledit bras (5) étant monté coulissant sur l'organe de liaison (4) et étant prévus des moyens d'actionnement (71) commandés par des moyens de détection de l'intention de l'utilisateur (72), tel qu'un capteur d'effort, procédé selon lequel on détecte si l'utilisateur a l'intention d'exercer un effort sur le bras porte-outil, grâce auxdits moyens de détection de l'utilisateur et, lorsque la détection est positive, on commande lesdits moyens d'actionnement du bras pour assurer son déplacement en translation rectiligne, la direction du déplacement étant identique à celle détectée par les moyens de détection.

15. Utilisation du dispositif selon l'une des revendications 1 à 13 en parallèle avec les jambes d'un autre exosquelette.

## Patentansprüche

1. Vorrichtung von der Art eines Exoskeletts mit zwei Beinen (2, 3), die angeordnet sind, um mit den Füßen eines Benutzers gekoppelt zu werden, einem Verbindungsorgan (4) zwischen den oberen Enden der Beine, an die sie angelenkt ist, und einem mit dem Verbindungsorgan verbundenen Werkzeugtragarm (5),
**dadurch gekennzeichnet,**
**dass** die Beine und das Verbindungsorgan angeordnet sind, um im Wesentlichen ein Dreieck zu bilden, bei dem eine Spitze dem Verbindungsorgan gehört, so dass die gesamten auf die Vorrichtung angewendeten Kräfte zur Spitze des Dreiecks konvergieren.

2. Vorrichtung nach Anspruch 1,
**dadurch gekennzeichnet,**
**dass** mindestens ein Teil des Arms (5) verschiebbar auf dem Verbindungsorgan (4) angeordnet ist und die Vorrichtung Mittel (71) zur Betätigung des Arms in Abhängigkeit von den Bewegungen des Benutzers aufweist, um seine geradlinige translatorische Bewegung zu gewährleisten.

3. Vorrichtung nach Anspruch 2,
**dadurch gekennzeichnet,**
**dass** sie Mittel zum Erfassen der Absicht (72) des Benutzers aufweist, welche mit den Betätigungsmitteln (71) verbunden sind, um diese zu steuern, wobei diese Steuerung in Abhängigkeit von dem Niveau des erfassten Kraftaufwandes sowie von dessen Richtung ausgebildet ist.

4. Vorrichtung nach einem der Ansprüche 1 bis 3,
**dadurch gekennzeichnet,**
**dass** der Arm (5) auf dem Verbindungsorgan (4) drehbeweglich um eine während der Benutzung der Vorrichtung im Wesentlichen senkrechte Achse Z angeordnet ist.

5. Vorrichtung nach einem der Ansprüche 1 bis 4,
**dadurch gekennzeichnet,**
**dass** der Arm (5) auf dem Verbindungsorgan (4) drehbeweglich um eine Achse X angeordnet ist, die im Wesentlichen senkrecht zur Längsachse Y des Arms und zur Achse Z ist.

6. Vorrichtung nach einem der Ansprüche 1 bis 5,
**dadurch gekennzeichnet,**
**dass** das Verbindungsorgan (4) an das jeweilige Bein (2, 3) um eine Ache X angelenkt ist, die im Wesentlichen senkrecht zur Achse Z und zur Längsachse Y des Arms ist, wenn die Vorrichtung ruht.

7. Vorrichtung nach einem der Ansprüche 1 bis 6,
**dadurch gekennzeichnet,**
**dass** der Arm eine Stange mit einem Werkzeug an einem Ende aufweist, welches dazu bestimmt ist, mit dem Boden in Kontakt zu stehen.

8. Vorrichtung nach Anspruch 7,
**dadurch gekennzeichnet,**
**dass** der Arm eine Stange aufweist, die drehbeweglich in Bezug auf den Arm um dessen Längsachse Y angeordnet ist.

9. Vorrichtung nach einem der Ansprüche 1 bis 8,
**dadurch gekennzeichnet,**
**dass** das jeweilige Bein (2, 3) zwei Stangen (25, 26; 35, 36) aufweist, welche verschiebbar in Bezug aufeinander angeordnet sind, wobei Arretierungsmittel vorgesehen sind.

10. Vorrichtung nach einem der Ansprüche 1 bis 9,
**dadurch gekennzeichnet,**
**dass** sie mindestens einen ersten Griff (6) aufweist, der für das Greifen der Vorrichtung durch einen Benutzer bestimmt ist und in dem die Mittel zum Erfassen der Absicht des Benutzers vorgesehen sind.

11. Vorrichtung nach einem der Ansprüche 1 bis 10,
**dadurch gekennzeichnet,**
**dass** sie einen zweiten Griff (7) aufweist, der um einen Abstand nicht gleich Null von dem ersten (6) beabstandet und an dem Verbindungsorgan (4) befestigt ist.

12. Vorrichtung nach einem der Ansprüche 1 bis 11,
**dadurch gekennzeichnet,**
**dass** die Beine (2, 3) über Kugelgelenke (27, 37) mit den Sohlen (22) und (32) verbunden sind.

13. Vorrichtung nach einem der Ansprüche 1 bis 12,
**dadurch gekennzeichnet,**
**dass** die Beine (2, 3) motorisiert sind.

14. Verfahren zur Verwendung einer Vorrichtung (1) von der Art eines Exoskeletts nach Anspruch 3 mit zwei Beinen (2, 3), einem Verbindungsorgan (4) zwischen den oberen Enden der Beine, an die es angelenkt ist, und einem mit dem Verbindungsorgan verbundenen Werkzeugtragarm (5),
**wobei** die Beine und das Verbindungsorgan angeordnet sind, um im Wesentlichen ein Dreieck zu bilden, bei dem eine Spitze dem Verbindungsorgan gehört, und
**wobei** der Arm (5) verschiebbar auf dem Verbindungsorgan (4) angeordnet ist und wobei Betätigungsmittel (71) vorgesehen sind, die durch Mittel zum Erfassen der Absicht des Benutzers (72) gesteuert werden, wie ein Kraftaufwandsensor,
bei dem erfasst wird, ob der Benutzer die Absicht hat, mithilfe der Benutzererfassungsmittel einen Kraftaufwand auf den Werkzeugtragarm auszuüben, und bei positiver Erfassung die Mittel zur Betätigung des Arms gesteuert werden, um seine geradlinige translatorische Bewegung zu gewährleisten, wobei die Bewegungsrichtung und die von den Erfassungsmitteln erfasste Richtung identisch sind.

15. Verwendung der Verrichtung nach einem der Ansprüche 1 bis 13 parallel zu den Beinen eines anderen Exoskeletts.

## Claims

1. Device of the exoskeleton type comprising two legs (2, 3) arranged to be coupled to the feet of a user, a connecting member (4) between the upper ends of the legs to which it is hinged and a tool-holder arm (5) connected to the connecting member (4), **characterised in that** the legs and the connecting member are arranged to form substantially a triangle of which an apex belongs to the connecting member, so that all forces applied to the device converge at the apex of said triangle.

2. Device according to claim 1, **characterised in that** at least a part of the arm (5) is mounted in sliding relationship on said connecting member (4) and **in that** the device comprises means (71) for actuating said arm, as a function of the movements of the user, in order to ensure displacement thereof in rectilinear translation.

3. Device according to claim 2, **characterised in that** it comprises means (72) for detecting the user's intention, connected to said actuating means (71) in order to control them, this control being performed as a function of the level of the force detected as well as its direction.

4. Device according to one of claims 1 to 3, **characterised in that** the arm (5) is mounted, on the connecting member (4), so as to be rotatable about a substantially vertical axis Z when the device is in use.

5. Device according to one of claims 1 to 4, **characterised in that** the arm (5) is mounted so as to be rotatable on the connecting member (4) about an axis X substantially perpendicular to the longitudinal axis Y of the arm and to the axis Z.

6. Device according to one of claims 1 to 5, **characterised in that** the connecting member (4) is hinged to each of the legs (2, 3) about an axis X substantially perpendicular to the axis Z and to the longitudinal axis Y of the arm when the device is at rest.

7. Device according to one of claims 1 to 6, **characterised in that** the arm comprises a rod with a tool at one end designed to be in contact with the ground.

8. Device according to claim 7, **characterised in that** the arm comprises a rod which is mounted so as to be rotatable relative to the arm, about its longitudinal axis Y.

9. Device according to one of claims 1 to 8, **characterised in that** each of the legs (2, 3) comprises two rods (25, 26; 35, 36) mounted in sliding relationship relative to each other, locking means being provided.

10. Device according to one of claims 1 to 9, **characterised in that** it comprises at least one first handle (6) designed for gripping of the device by a user, in which are provided the means for detecting the user's intention.

11. Device according to one of claims 1 to 10, **characterised in that** it comprises a second handle (7), remote from the first one (6) by a non-zero distance and fixed to the connecting member (4).

12. Device according to one of claims 1 to 11, **characterised in that** the legs (2, 3) are connected to the soles (22) and (32) by means of ball joints (27, 37).

13. Device according to one of claims 1 to 12, **characterised in that** the legs (2, 3) are motor-driven.

14. Method for using a device (1) of the exoskeleton type according to claim 3, comprising two legs (2, 3), a connecting member (4) between the upper ends of said legs to which it is hinged and a tool-holder arm (5) connected to the connecting member, the legs and the connecting member being arranged to form substantially a triangle of which an apex belongs to the connecting member, and said arm (5) being mounted in sliding relationship on the connecting member (4), and actuating means (71) controlled by the means (72) for detecting the user's intention, such as a force sensor, being provided,
according to which method it is detected whether the user intends to exert a force on the tool-holder arm, owing to said means for detecting the user's intention and, when detection is positive, said means for actuating the arm are controlled in order to ensure displacement thereof in rectilinear translation, the direction of displacement being identical with the one detected by the detection means.

15. Use of the device according to one of claims 1 to 13 in parallel with the legs of another exoskeleton.
